# EUROPEAN PATENT APPLICATION

(11) **EP 1 311 119 A2**
(43) Date of publication of application: **14.05.2003**
(21) Application number: 02292790.9
(22) Date of filing: 08.11.2002
(51) Int. Cl.: H04N 5/44

(54) **System and method of assigning a home channel**

(30) Priority: 10.11.2001 US 11145
(71) Applicant: Thomson Licensing S.A., 92100 Boulogne-Billancourt (FR)
(72) Inventor: Morrison, Hugh Boyd, North Seattle, WA 98103 (US)
(74) Representative: Kohrs, Martin

(57) **Abstract**

A television signal receiver is operative to allow the assigning of a home channel and to tune to that home channel upon power-up of the television signal receiver. The home channel may be selected according to a channel label that identifies the broadcaster, broadcast affiliate or broadcast channel type regardless where the channel is assigned in the area or system of the receiver. The channel label is transmitted as auxiliary data. In one form, the manufacturer of the television signal receiver selects or sets the home channel, which may or may not be changeable by a user of the television signal receiver. In another form, the user of the television signal receiver selects or sets the home channel. The home channel feature may be disabled if desired.

## Description

### BACKGROUND OF THE INVENTION

### Field of the Invention

The present invention relates to a system and method of processing video information and, more particularly, to a system and method of assigning a home channel in a video apparatus, taking advantage of channel information available from, for example auxiliary video data.

### Description of the Related Art

In most televisions of today, when the television is turned off and then turned back on, the television remains tuned to the channel last selected before being turned off. In the case of commercial televisions (i.e. televisions that are used in businesses such as hotels, hospitals, institutions, and the like), some commercial televisions have been designed to implement home channels in which a particular channel, for instance channel 2, is assigned as the home channel. When the commercial television is turned on, the particular home channel is always selected regardless of what channel the television was tuned to when shut off. This selection allows hotels and the like to assign a particular channel to appear every time the television is turned on. Typically, the home channel provides information about the television system as well as advertisements for pay-per-view movies, games, and other revenue opportunities for the commercial entity. Users of these systems, however, cannot change the home channel. Additionally, these systems can only be used to tune the television to a particular channel (number) upon start-up.

With respect to computers, it is known for World Wide Web or Internet browsers to always begin with fetching a "home page" for viewing. The browser manufacturer or distributor typically sets a default home page that is changeable by the user or which may be disabled altogether. Thus, when the browser is invoked, the home page is displayed. This is useful to users that desire to always start at the same point. As well, it allows the manufacture or distributor to collect revenue because web sites are willing to pay for this default home page status.

Most televisions of today are able to receive and interpret (process) auxiliary information or data that is sent along with a television signal. Such auxiliary data includes closed captioning information, extended data services (XDS) data, electronic program guide (EPG) data, and the like. XDS allows a broadcaster to send the current time, channel label/broadcaster, current program title, current program description, time remaining in the current program, and other information. EPGs can send the same data as XDS and more. Such auxiliary data is typically, but not necessarily, sent in the vertical blanking interval (VBI) between frames of an analog television signal or as packets of data in the case of a digital television signal.

### SUMMARY OF THE INVENTION

The present inventor recognizes that it would be beneficial for various parties if a television or television signal receiver were able to provide a home starting point or channel based on a particular television signal broadcaster or local affiliate, no matter where the television is or what type of signal is being received (e.g., cable, satellite, or air).

The present invention is a system, method and apparatus for assigning and/or tuning to a home channel in a video apparatus. In particular, the present invention is a system, method and apparatus for assigning a particular broadcaster, affiliate or broadcast channel type in a television signal receiver and/or tuning to the selected broadcaster, affiliate or broadcast channel type in a television signal receiver when the television signal receiver is turned on.

In one form, the present invention is a method of providing a home channel in a television signal receiver. The method includes the steps of (a) storing a selected channel label corresponding to a provider; (b) acquiring channel information from a source; (c) determining from the acquired channel information, the broadcast channel frequency corresponding to the selected channel label; and (d) tuning to the corresponding channel frequency when the video apparatus is turned on.

### BRIEF DESCRIPTION OF THE DRAWINGS

The above-mentioned and other features and advantages of this invention, and the manner of attaining them, will become more apparent and the invention will be better understood by reference to the following description of embodiment(s) of the invention taken in conjunction with the accompanying drawings, wherein:
Fig. 1 is a block diagram of an exemplary television signal receiver in which the present invention may be utilized;
Fig. 2 is a flowchart of an exemplary manner of operation of the present invention; and
Figs. 3A and 3B are illustrations of an on-screen display of a home channel menu.

Corresponding reference characters indicate corresponding parts throughout the several views.

### DETAILED DESCRIPTION OF THE INVENTION

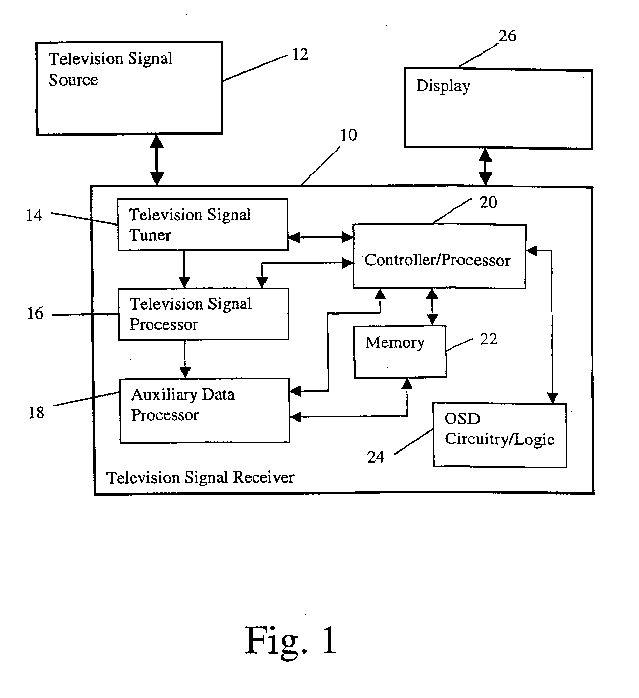

Referring now to the drawings and, more particularly to Fig. 1, there is depicted a video apparatus, for example, a television signal receiver, generally designated 10. The television signal receiver 10 is representative of a television with or without an integral display, a VCR, VTR, satellite receiver, set-top box (e.g. cable box), and any other device capable of receiving, processing, and/or utilizing television signals. Hereafter, unless specifically indicated to the contrary, the term television signal receiver includes the various forms or types of television signal receivers.

The television signal receiver 10 is coupled to a source of television signals, generally designated 12. The television signal source 12 is representative of any source of television signals such as terrestrial broadcast television signals as are received by an appropriate antenna or aerial (not shown), a cable television (CATV) distribution system (not shown), a satellite system (DSS, DBS or the like) having an appropriate receiving dish or antenna (not shown), or the like, or any combination of the above systems. The television signal source 12 typically provides, and the present invention assumes, a plurality of television channels, each television channel providing a particular broadcast or program stream from a broadcaster, broadcast affiliate, network, or the like. Each television channel may be considered a television signal.

The television signals from the television signal source 12 may be either analog or digital television signals, or a combination of analog and digital television signals. As such, the television signal receiver 10 is operative to receive and/or appropriately process analog television signals, digital television signals, and/or a combination of analog and digital television signals.

Each television channel from the television signal source 12 includes, at a minimum, auxiliary data providing channel information, including channel label for the particular television channel. In addition, each television channel may include other auxiliary data such as XDS, closed captioning, or the like. The term auxiliary data thus includes, at a minimum, channel label data. Alternatively, a single television channel may carry the auxiliary data in the form of EPG data. The channel label is an identifier of the broadcaster, affiliate, network or the like of the particular television channel (collectively "provider"). For example, the channel label may be NBC, CBS, FOX, ABC, ESPN, the Disney Channel, A&E, Animal Planet, the Travel Channel, TVLAND, or the like. In the case of an analog television signal, the channel label may be provided in the VBI. In the case of a digital television signal, the channel label may be provided as a packet within the digital data. Of course, other manners of providing channel labels for the plurality of television channels may be provided. A correlation may then be made between the television channel label and the television channel number.

The television signal receiver 10 includes a television signal tuner 14 (or television signal tuner circuitry/logic) that is operative to tune to a particular television channel or signal. A television signal processor 16 (or television signal processing circuitry/logic) is also provided in the television signal receiver that is operative to decode and/or process the tuned television channel. An auxiliary data processor 18 (or auxiliary data processing circuitry/logic) is included that is operative to extract, decode, and/or process the auxiliary data of the television channel or television signals (dependent upon how the auxiliary data is transmitted). At a minimum, the auxiliary data processor 18 is operative to recognize, extract, and/or process channel labels.

The television signal processor 10 also includes a controller or processor 20 (or controller/processor circuitry/logic) that is operative to control, process and/or run the various components of the television signal receiver 10. Memory 22 (or memory circuitry/logic) is also provided that is operative to store program instructions for operation of the television signal receiver 10 (such as for the present invention), data, and other information as necessary.

It should be understood that the various components of the television signal receiver 10 are only exemplary of the type of components that may perform the function/functions of the present invention. As well, the various connections illustrated in Fig. 1 are only exemplary of connections or communications paths that allow the television signal receiver 10 to function.

The television signal receiver 10 is operative to allow the setting or selection of a home channel based on the channel label. In particular, according to one aspect of the present invention, the television signal receiver 10 is operative to allow the setting of a home channel of which the television signal receiver 10 automatically goes (tunes) to when the television signal receiver 10 is turned on. According to this aspect of the present invention, a particular home channel (channel label) is programmed into the television signal receiver. In one embodiment of the invention, this home channel label may be preprogrammed by a manufacturer or the like, before the video apparatus even reaches the retailer. This has the advantage of allowing the TV manufacturer or marketer to generate additional revenue by charging the channel provider a fee to make its channel the home channel.

This may be accomplished by providing the selected channel label in non-erasable memory 22. Of course, other manners of coding the information into the television signal receiver 10 may be used. When the television signal receiver is turned on, auxiliary information in the television signal (typically each television channel) is scanned by the auxiliary signal processor 16 in order to determine what television channel frequency includes the selected channel label, in the particular system or area where the video apparatus resides. Once the particular television channel is determined, the television signal tuner 14 is tuned to that television channel. This information is then stored in the memory 22 such that every time thereafter that the television signal receiver 10 is turned on, the home channel television signal/channel is displayed (i.e. the television signal receiver 10 tunes to that channel).

Because the television signal receiver 10 may be moved from one location to another, the above procedure may be accomplished after every time that the television signal receiver is unplugged. Moving the television may indicate that there is a channel line-up change (i.e. a different cable company, etc.) Since the television signal receiver 10 utilizes a small amount of electricity even in the "off" state (in order to maintain at least some of the circuitry/logic in a standby state), the channel label will be maintained. Unplugging the television signal receiver 10 eliminates the small amount of electricity that maintains the circuitry/logic in the standby state. Thus, by removing the small amount of electricity, the television signal receiver 10 may initiate a scan of the plurality of channels for an appropriate home channel (channel label). This may be to cover the case where the television signal receiver has been moved from one location to another. Additionally, the user may initiate a scan for the channel label, if desired. This may be accomplished by a menu choice. Also, the television signal receiver 10 may provide an override choice for rescanning, where the television signal receiver 10 has not been moved but has only experienced a blackout, or where the television signal receiver 10 has been moved, but not from one channel (lineup) system to another (i.e. from one location to another location in the same dwelling).

According to another aspect of the present invention, the user may select the home channel. Such selection may be in addition to the setting of the home channel by the manufacturer/distributor of the television signal receiver 10 or may be the only manner of affecting a home channel. The selection of a home channel may be optional or it may be mandatory. As well, a user may change the home channel or may disable the home channel feature. In the case of disabling the home channel, the television signal receiver 10 would revert to a normal or typical operating mode in which the television signal receiver 10 remains tuned to the channel being viewed when turned off.

One manner of providing user selection of the home channel may be via an on-screen menu. Referring additionally to Fig. 1, the television signal receiver 10 may thus include on-screen display (OSD) circuitry/logic 24 that is operative to generate appropriate on-screen alphanumeric and other characters and provide same to a display 26. The display 26 may be integral with the television signal receiver 10 or may be external thereto. The on-screen menu functions in a known manner.

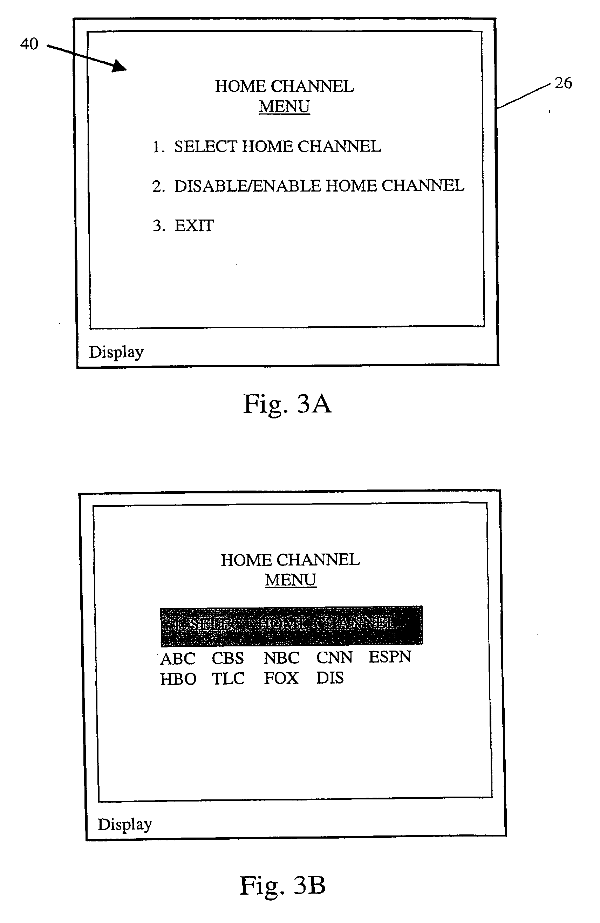

Fig. 3 depicts an exemplary on-screen menu, generally designated 40, on the display 26. It should be initially appreciated that all of the features/functions described herein are not necessarily shown on the exemplary on-screen menu 40. The features/functions not shown or described in conjunction with the on-screen menu 40 nevertheless are accessible via an on-screen menu 40 or the like and are initiated/invoked in a manner that is the same or similar to the manner in which the features/functions shown are initiated/invoked. Additionally, the manner of operation of the on-screen menu 40 is preferably controlled by software in a manner known in the art. The on-screen menu 40 may be invoked via a remote control (not shown) in a manner known in the art (and subsequently received by the television signal receiver 10 via a remote control sensor and appropriate circuitry/logic, not shown). The on-screen menu 40 may include several choices such as "1. Select Home Channel"; "2. Disable/Enable Home Channel"; and "3. Exit." Selection of the menu choices may be accomplished via the remote control or other user-interface device. Fig. 3B shows how a particular channel label or broadcaster may be selected once choice 1 "SELECT HOME CHANNEL in Fig. 3A has been chosen.

The selection of any menu choice either accomplishes the selection (as in the case of "Exit" or "Disable/Enable Home Channel") or provides another menu or appropriate selection scheme to allow the user to indicate a particular home channel. Selection of a menu choice may be accomplished via the remote control or any other manner as is known in the art. The user has the option to disable the home channel function/capability, or to enable the home channel function/capability. If the home channel is enabled, either the "factory" home channel setting will be used, or the user will select the home channel.

The television signal receiver 10 is further operative via the auxiliary data processor 18 to obtain channel labels from the television channel. As indicated above, each television channel may include its (a) channel label within its (the) broadcast signal. In this case, the television signal receiver 10 may scan all television channels after the home channel is set/selected in order to find the particular selected home channel. This channel is then stored in memory so that the television signal receiver 10 may tune to that channel every time the television signal receiver 10 is turned on again. If the selected channel is not located, a message or the like may be provided to inform the user of same and allow another home channel to be selected.

Alternatively, one particular channel may carry home channel/label information. In this case, the particular channel may be consulted for locating the selected home channel. Again, this channel is then stored in memory so that the television signal receiver 10 may tune to that channel every time the television signal receiver 10 is turned on again.

Preferably, the present invention is implemented via software/program instructions. The program instructions allow the various components of the television signal receiver 10 to operate in the manner set forth herein. The program instructions (software) for the present invention are stored in the memory 22 and allows the television signal receiver 10 to operate in the manner set forth herein.

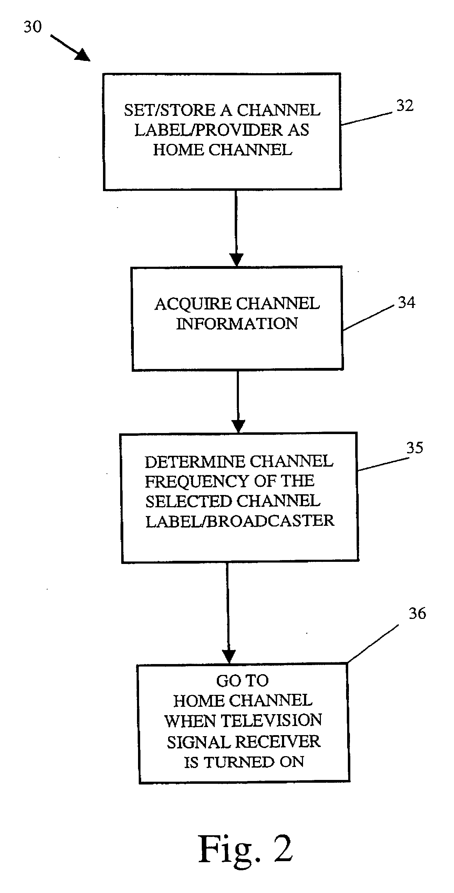

Referring to Fig. 2, there is depicted a flowchart, generally designated 30, of an exemplary manner of operation of a video apparatus such as a television signal receiver 10 in accordance with the principles of the present invention. Initially, in step 32, a home channel is set or selected. This may be done by selecting a channel label corresponding to a provider. As indicated herein, the manufacturer and/or user of the television signal receiver sets or selects a particular program provider, broadcaster, broadcast affiliate, or broadcast type. The television signal receiver stores the home channel/channel label in memory. Selection of the home channel may be also be "hardwired" such that it cannot be thereafter changed. The user may, in one form, disable the home channel feature. Alternatively, or additionally, a user may change the home channel. In the case where the user is permitted to change the home channel, a menu 40 shown in Figs 3A and 3B or other selection means may be provided.

In step 34, the television signal receiver 10 acquires channel information from a signal source. This is to correlate the selected home channel with a particular channel number or frequency via the channel information, as shown in step 35. Once the chosen home channel is located or acquired, the data is stored in the memory 22.

Lastly, in step 36, the television signal receiver 10 tunes to the chosen home channel when the television signal receiver 10 is turned on. The television signal receiver 10 will always tune to the chosen home channel when turned on unless the feature is disabled (if permitted).

While this invention has been described as having a preferred design, the present invention can be further modified within the spirit and scope of this disclosure. This application is therefore intended to cover any variations, uses, of adaptations of the invention using its general principles. Further, this application is intended to cover such departures from the present disclosure as come within known or customary practice in the art to which this invention pertains and which fall within the limits of the appended claims.

## Claims

1. A method of providing a home channel in a video apparatus, comprising the steps of:
storing a selected channel label corresponding to a provider;
acquiring channel information from a source;
determining from the acquired channel information, the broadcast channel frequency corresponding to the selected channel label; and
tuning to the corresponding channel frequency when the video apparatus is turned on.

2. The method of claim 1, wherein the selected channel label is selected before the video apparatus is sold to a retailer.

3. The method of claim 1, wherein the selected channel label is selected by a user of the video apparatus.

4. The method of claim 3, wherein the channel label is selected via an on-screen menu.

5. The method of claim 1, wherein the acquiring step is accomplished via one of data contained in a vertical blanking interval of the television signal and of data contained in a packet of the television signal.

6. The method of claim 1, further comprising the step of permitting a user to disable and enable the completion of the steps.

7. The method of claim 1, wherein the channel information source is an electronic program guide.

8. A system for providing a home channel in a video apparatus, comprising:
means for storing a selected channel label corresponding to a provider; means for acquiring channel information from a source;
means for determining from the acquired channel information, the broadcast channel frequency corresponding to the selected channel label; and
means for tuning to the corresponding channel frequency when the video apparatus is turned on.

9. The system of claim 1, wherein the selected channel label is selected before the video apparatus is sold to a retailer.

10. The system of claim 1, wherein the selected channel label is selected by a user of the video apparatus.

11. The system of claim 3, wherein the channel label is selected via an on-screen menu.

12. The system of claim 1, wherein the channel information is acquired via one of data contained in a vertical blanking interval of the television signal and of data contained in a packet of the television signal.

13. The system of claim 1, further comprising means for permitting a user to disable and enable the completion of the steps.

14. The system of claim 1, wherein the channel information source is an electronic program guide.

15. A system for providing a home channel in a video apparatus, comprising:
memory operative to store a selected channel label corresponding to a provider;
data processor operative to acquire channel information from a source;
controller operative to determine from the acquired channel information, the broadcast channel frequency corresponding to the selected channel label; and
a tuner operative to tune to the corresponding channel frequency when the video apparatus is turned on.

16. The method of claim 1 further comprising the step of charging the provider a fee.
